# EUROPEAN PATENT SPECIFICATION

(11) **EP 4 379 581 B1**
(45) Date of publication and mention of the grant of the patent: **29.04.2026**
(21) Application number: 23212589.8
(22) Date of filing: 28.11.2023
(51) Int. Cl.: G06F 21/10, G06F 21/60, H04L 9/40, H04W 12/10, G06F 21/57, G06F 21/53

(54) **DATA PROCESSING METHOD AND APPARATUS, ELECTRONIC DEVICE AND STORAGE MEDIUM**
DATENVERARBEITUNGSVERFAHREN UND -VORRICHTUNG, ELEKTRONISCHE VORRICHTUNG UND SPEICHERMEDIUM
PROCÉDÉ ET APPAREIL DE TRAITEMENT DE DONNÉES, DISPOSITIF ÉLECTRONIQUE ET SUPPORT D'INFORMATIONS

(30) Priority: 01.12.2022 CN 202211531134
(43) Date of publication of application: 05.06.2024
(73) Proprietor: Beijing Volcano Engine Technology Co., Ltd., Beijing 100190 (CN)
(72) Inventor: YANG, Xinying, Beijing, 100028 (CN)
(74) Representative: Marks & Clerk LLP

(56) References cited:
- US-A1- 2014 052 999
- US-A1- 2020 125 772
- US-A1- 2021 359 841

## Description

### TECHNICAL FIELD

The present disclosure relates to the technical field of computer technology, and in particular, to a data processing method and apparatus, an electronic device and a storage medium.

### BACKGROUND

Data tracing can be understood as recording evolution information and evolution processing content of data in the entire life cycle, and the historical state and the evolution process of the data can be reconstructed according to the tracing path, so as to realize tracing of data historical archive, however, in the data tracing process, it may be subjected to attacks, which would result in wrong data tracing results or problems arising therefrom, and thus, it is very important to guarantee the data tracing credibility.
Disclosed in US20140052999A1 are embodiments of the invention broadly described, introducing systems and methods for enabling the searching of encrypted data. One embodiment of the invention discloses a method for generating a searchable encrypted database. The method comprises receiving a plurality of sensitive data records comprising personal information of different users, identifying one or more searchable fields for the sensitive data records, wherein each searchable field is associated with a subset of the personal information for a user, generating a searchable field index for each of the one or more searchable fields, and encrypting the sensitive data records using a database encryption key.
Disclosed in US2021359841A1 are methods, systems, and apparatus, including computer programs encoded on computer storage media, for data tracing. One of the methods includes: receiving a data backtracking request, the data backtracking request comprising a version identifier of a first data version of a target object; obtaining, from the blockchain, version identifiers of a plurality of second data versions of the target object and a plurality of data blocks in the blockchain, wherein the second data versions comprise an initial data version of the target object, and at least one of the obtained data blocks comprises a version identifier of the initial data version; and determining, based on the version identifier of the initial data version, data content corresponding to the initial data version of the target object.

### SUMMARY

Embodiments of the present disclosure at least provide a data processing method and apparatus, an electronic device and a storage medium. The invention is set out in the appended set of claims.

In a first aspect, the embodiments of the present disclosure provide a data processing method, comprising:
receiving a data tracing request sent by a client, wherein the tracing request carries a tracing clue ciphertext which is generated by encrypting a target tracing clue based on a shared key agreed by the client and a trusted hardware execution environment, and wherein the target tracing clue is used for identifying target data;
decrypting the tracing clue ciphertext in the trusted hardware execution environment to obtain the target tracing clue;
searching for target data matched with the target tracing clue from a database according to the target tracing clue, and determining a target tracing result according to the target data; wherein the database is used for storing the corresponding relationship between the data identification information and the data and supporting query access of the data; and
in response to the data tracing request, feeding back the target tracing result to the client.

In an optional implementation, the determining a target tracing result according to the target data comprises:
in the case where the data identification information in the corresponding relationship stored in the database is a ciphertext, using the found target data by search as a target tracing result.

In an optional implementation, the determining a target tracing result according to the target data comprises:
in the case where the data identification information in the corresponding relationship stored in the database is a plaintext, encrypting the target data according to the found target data by search and using the encrypted target data as the target tracing result.

In an optional implementation, in response to the data tracing request, feeding back the target tracing result to the client comprises:
signing the target tracing result to obtain a target signature of the target tracing result; and
returning the target tracing result and the target signature to the client.

In an optional implementation, the corresponding relationship between the data identification information and the data is stored in a table format.

In a second aspect, the embodiments of the present disclosure further provide a data processing apparatus, comprising:
a receiving module configured to receive a data tracing request sent by a client, wherein the tracing request carries a tracing clue ciphertext which is generated by encrypting a target tracing clue based on a shared key agreed by the client and a trusted hardware execution environment, and wherein the target tracing clue is used for identifying target data;
a decryption module configured to decrypt the tracing clue ciphertext in the trusted hardware execution environment to obtain the target tracing clue;
a determination module configured to search for target data matched with the target tracing clue from a database according to the target tracing clue and determine a target tracing result according to the target data; wherein the database is used for storing the corresponding relationship between the data identification information and the data and supporting query access of the data; and
a sending module configured to, in response to the data tracing request, feed the target tracing result back to the client.

In an optional implementation, when determining a target tracing result according to the target data, the determination module is configured to:
in the case where the data identification information in the corresponding relationship stored in the database is a ciphertext, use the found target data by search as a target tracing result.

In an optional implementation, when determining a target tracing result according to the target data, the determination module is configured to:
in the case where the data identification information in the corresponding relationship stored in the database is a plaintext, encrypt the target data according to the found target data by search and use the encrypted target data as the target tracing result.

In an optional implementation, when, in response to the data tracing request, feeding back the target tracing result to the client, the sending module is configured to:
sign the target tracing result to obtain a target signature of the target tracing result; and
return the target tracing result and the target signature to the client.

In a third aspect, the optional implementations of the present disclosure further provide an electronic device, which comprises a processor and a memory, wherein the memory stores machine-readable instructions executable by the processor, the processor is used for executing the machine-readable instructions stored in the memory, and when the machine-readable instructions are executed by the processor, the processor implements the steps in the above first aspect or in any one of possible implementations in the first aspect.

In a fourth aspect, the optional implementations of the present disclosure further provide a computer-readable storage medium, wherein the computer-readable storage medium stores thereon a computer program, and when the computer program is executed by a processor, the processor implements the steps in the above first aspect or in any one of possible implementations in the first aspect.

In the embodiments of the present disclosure, a data tracing request is received, wherein the tracing request carries a tracing clue ciphertext which is generated by encrypting a target tracing clue based on a shared key agreed by the client and a trusted hardware execution environment, and wherein the target tracing clue is used for identifying target data; the tracing clue ciphertext is decrypted in the trusted hardware execution environment to obtain the target tracing clue; target data matched with the target tracing clue is found by search from a database according to the target tracing clue, and a target tracing result is determined according to the target data; wherein the database is used for storing the corresponding relationship between the data identification information and the data and supporting query access of the data; and in response to the data tracing request, the target tracing result is fed back to the client. In this way, by adopting the manner in which an encryption method is combined with a TEE hardware, the tracing clue ciphertext is decrypted and traced in the TEE, so that the server cannot acquire what the actual value of the target tracing clue is, and thus it is impossible to attack or tamper with the table contents in the database, which improves the accuracy and credibility of the target tracing result; furthermore, for the data processing method in the embodiments of the present disclosure, since there is no restriction on the stored data structure and a special data storage structure is not required, for example, a simple format of data table may be used and the writing of each data record can be realized by table insertion, the data processing method not only can realize credible tracing in a highly efficient manner, but also improves writing performance.

Reference is made to the description of the above data processing method for the description of effects of the data processing apparatus, the electronic device and the computer-readable storage medium as mentioned above, and no repetition is further made here.

It should be understood that both the foregoing general description and the following detailed description are illustrative and explanatory only, rather than restrictive of the technical solutions of the present disclosure.

In order to make the above-mentioned objectives, features and advantages of the present disclosure more obvious and easier to understand, preferred embodiments with reference to the accompanying drawings are described in detail as follows.

### BRIEF DESCRIPTION OF THE DRAWINGS

In order to illustrate the technical solutions of the embodiments of the present disclosure in a more clearly manner, the accompanying drawings necessary to be used in the embodiments will be briefly described below. The accompanying drawings herein are incorporated in and form a part of the description; they illustrate embodiments consistent with the present disclosure and, together with the description, serve to illustrate the technical solutions of the present disclosure. It is to be understood that the following drawings only depict some embodiments of the present disclosure and are therefore not to be construed as limiting the scope, and for those skilled in the art, other relevant drawings may be derived from these drawings without any creative effort.
Fig. 1 is a flowchart of a data processing method provided by the embodiments of the present disclosure;
Fig. 2 is a diagram illustrating an application architecture of a data processing method provided by the embodiments of the present disclosure;
Fig. 3 is a schematic diagram of a data processing apparatus provided by the embodiments of the present disclosure;
Fig. 4 is a schematic diagram of an electronic device provided by the embodiments of the present disclosure.

### DETAILED DESCRIPTION

It may be understood that, prior to the implementation of the technical solutions disclosed in the embodiments of the present disclosure, users shall be informed of the type, the range of use, the scenarios of use, etc. of personal information related to the present disclosure in a proper manner in accordance with relevant laws and regulations, and authorization of the users shall be obtained.

To make the objectives, technical solutions and advantages of the embodiments of the present disclosure more clearly comprehensible, the technical solutions in the embodiments of the present disclosure will be described clearly and completely with reference to the accompanying drawings in the embodiments of the present disclosure, and the embodiments as described are only a part of the embodiments of the present disclosure, rather than all of the embodiments. The components of the embodiments of the present disclosure, as described and illustrated herein, can generally be arranged and designed in a variety of different configurations. Thus, the following detailed description of the embodiments of the present disclosure is not intended to limit the scope of protection of the present disclosure, but is merely representative of selected embodiments of the present disclosure. All other embodiments, which can be derived by those skilled in the art based on the embodiments of the present disclosure without making any creative effort, shall fall within the scope of protection of the present disclosure.

To facilitate understanding of the technical solutions of the present disclosure, technical terms in the embodiments of the present disclosure are first explained:
Data tracing: It can record evolution information and evolution processing content of data in the entire life cycle, and the historical state and the evolution process of the data can be reconstructed according to the tracing path, so as to realize tracing of data historical archive, that is, the source and the trend of the data can be traced, based on which relevant operation of data analysis can be carried out.
Database Management System (DBMS): It is large-scaled software that operates and manages a database, which is used for establishing, using and maintaining the database and the like, and it can perform unified management and control on the database, so as to ensure the safety and the integrity of the database. Users access the data in the database through the DBMS, and database administrators can also perform maintenance work on the database through the DBMS.
Trusted Execution Environment (TEE): It protects operations and manipulations related to private data by means of hardware isolation, so that, on the premise of not hacking the hardware, an attacker cannot directly read the private data therein and a system key, thereby guaranteeing confidentiality of the data, and the attacker cannot tamper detection through solidified hardware logic on the hardware level, which can guarantee that relevant system operation processes are prevented from being maliciously tampered.

It has been found out through studies that it may be attacked in the data tracing process, for example, an attack where a midpoint is hidden or an attack where the latest information is hidden, wherein the attack where a midpoint is hidden is namely hiding a problematic part when data tracing is carried out and failing to return the problematic record information, so as to hide a certain problematic part in the middle, and the attack where the latest information is hidden is namely hiding the latest recorded information and failing to return the most recently updated record information, so that the returned data tracing result is wrong, thereby rendering the verification of the data tracing result even more inaccurate and reducing the safety and reliability, and therefore, how to guarantee the credibility of data tracing is critically important.

Based on the above studies, the present disclosure provides a data processing method, which comprises: receiving a data tracing request sent by a client, wherein the tracing request carries a tracing clue ciphertext, decrypting the tracing clue ciphertext in the trusted hardware execution environment to obtain the target tracing clue , searching for target data matched with the target tracing clue from a database according to the target tracing clue , determining a target tracing result according to the target data, and in response to the data tracing request, feeding back the target tracing result to the client. In this way, an efficient data processing method is provided, wherein it is a tracing clue ciphertext that is sent by the client and decryption and data matching of the tracing clue ciphertext are performed in a TEE, and thus, a server cannot know what the target tracing clue is, and cannot determine the relationship between the target tracing result and the target tracing clue , that is, cannot deduce what the target tracing clue is from the target tracing result, accordingly, an effective data content attack cannot be carried out, thereby improving the accuracy and credibility of the tracing result.

All the above drawbacks are the conclusions made by the inventor after practical and careful studies, and therefore, the discovery process of the above problems and the solutions proposed by the present disclosure with respect to the above problems in the following description should both be the contributions made by the inventor to the present disclosure in the course of the present disclosure.

It should be noted that similar reference signs and letters refer to similar items in the subsequent drawings, and thus, once an item is defined in one drawing, it is not necessary to further define and explain it in the subsequent drawings.

To facilitate understanding of the present embodiments, a data processing method as disclosed in the embodiments of the present disclosure will be first described in detail. The execution subject of the data processing method provided by the embodiments of the present disclosure is generally an electronic device with certain computing power, and the electronic device comprises, for example, a terminal device or a server or other processing devices, wherein the terminal device may be a User Equipment (UE), a mobile device, a cellular phone, a cordless phone, a Personal Digital Assistant (PDA), a hand-held device, a computing device, a vehicle-mounted device, a wearable device, etc., wherein the PDA is a hand-held electronic device, which has some functions of an electronic computer, can be used to manage personal information, and can also browse the Internet, and send and receive e-mails, etc., and is generally not equipped with a keyboard and may be referred to as a palm computer. In some possible implementations, the data processing method may be implemented by a processor calling computer-readable instructions stored in a memory.

The data processing method provided by the embodiments of the disclosure will be described as follows by taking the execution subject being a TEE as an example.

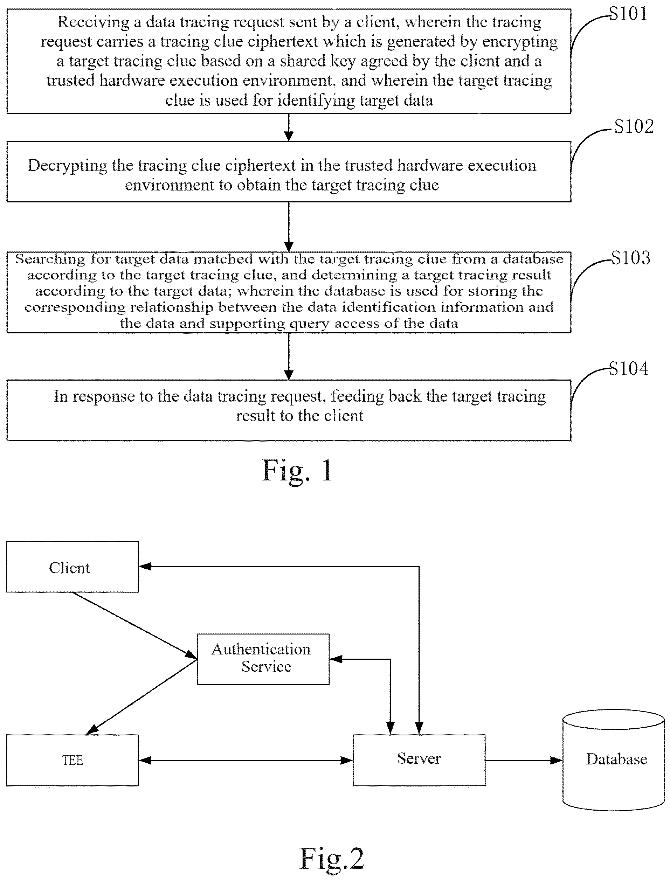

Referring to Fig. 1, which is a flowchart of a data processing method provided by the embodiments of the present disclosure, the method comprises:
S101, receiving a data tracing request sent by a client, wherein the tracing request carries a tracing clue ciphertext which is generated by encrypting a target tracing clue based on a shared key agreed by the client and a trusted hardware execution environment, and wherein the target tracing clue is used for identifying target data.

In the embodiments of the present disclosure, for a database-based data tracing scenario, a plurality of data records are stored in a database, for example, a user may input a target tracing clue through a client to initiate a tracing request, and then the client sends the tracing request containing the target tracing clue to a server for data tracing. Furthermore, in order to improve reliability, in the embodiments of the present disclosure, a TEE is mainly used for data tracing, wherein the TEE may be an independent device, or may also be a trusted execution environment established in a server, to which no definition is made in the embodiments of the present disclosure.

Specifically, when the step S101 is implemented, the present disclosure provides a possible implementation, where the client encrypts the target tracing clue to obtain a tracing clue ciphertext and sends the tracing clue ciphertext to the server, and the server further sends the tracing clue ciphertext to the TEE.

Herein, when the client encrypts the target tracing clue , a shared key agreed by the client and the TEE may be used for encryption, and no definition is made to the shared key specifically, for example, a random encryption method is adopted and the shared key may be a random key.

The target tracing clue may be understood as data identification information, and all relevant data records may be traced through the target tracing clue , for example, if the target tracing clue is an order number, data tracing may be performed through the order number, so as to obtain relevant data records of a full life cycle of the order corresponding to the order number.

S102, decrypting the tracing clue ciphertext in the trusted hardware execution environment to obtain the target tracing clue .

In the embodiments of the disclosure, in order to avoid attacks to the tracing process, decryption of the tracing clue ciphertext is performed in the TEE, the TEE and the client can share a key, but the server cannot know the key, so that the server cannot obtain the target tracing clue from the tracing clue ciphertext by decrypting.

For example, the target tracing clue is C1=123, the client randomly encrypts 123 to obtain a ciphertext of 123 and decrypts the ciphertext in the TEE, so as to obtain a value of the target tracing clue , that is, C1= 123.

S103, searching for target data matched with the target tracing clue from a database according to the target tracing clue , and determining a target tracing result according to the target data; wherein the database is used for storing the corresponding relationship between the data identification information and the data and supporting query access of the data.

To facilitate understanding, a database in the embodiments of the present disclosure is briefly described. In the embodiments of the present disclosure, a corresponding relationship between data identification information and data is stored in the database, the data identification information may be set as a tracing clue, and the corresponding relationship may be stored in form of a table, the table may be created through a language command of the database, and the data identification information may be defined as the tracing clue through the set language command of the database.

For example, referring to Table 1, an example of a possible table in a database in the embodiments of the present disclosure is shown.

**Table 1**

| C1 | C2 | C3 |
|---|---|---|
| 123 | 0 | Data1 |
| 456 | 0 | Data2 |
| 123 | 0 | Data3 |
| 789 | 0 | Data4 |
| 456 | 0 | Data5 |
| 123 | 0 | Data6 |

In the embodiments of the present disclosure, a table may be created in a database, for example, a creating statement is: create table T (C1 INT4, C2 INT8, C3 TEXT) means to create a table T, in which a value of C1 is an INT4 type, a value of C2 is an INT8 type, and a value of C3 is a TEXT type, as shown in Table 1, each row in the table is a piece of data record, each column may include data identification information, data, etc., and a value of each column is a specific content of this piece of data record.

Furthermore, a column that serves as a tracing clue may also be defined, for example, column C1 in Table 1 is data identification information of data, column C1 in Table 1 may serve as the tracing clue, and this definition statement may be used: IMMUAPP lineage with key C1, which means that the trusted application tracing clue is the value of C1, that is, the data tracing can be performed according to the value of C1.

It should be noted that, in the embodiments of the present disclosure, the value of C1 in the database may be stored after being encrypted, that is, the value of C1 is a ciphertext, or stored unencrypted, that is, the value of C1 is a plaintext, for example, when a data record is written into the database, the client may encrypt the value of C1 and then write the data record into the database for storage, for another example, the client does not encrypt the value of C1, but directly writes the data record into the database for storage, to which no definition is made in the embodiments of the present disclosure, and different tracing processes are correspondingly provided based on different cases where the value of C1 is encrypted or not.

The specific implementation of the step S103 comprises:
1) Searching for target data matched with the target tracing clue from a database according to the target tracing clue .
   For example, if the target tracing clue is C1=123, a query is made in the database, and three pieces of target data can be matched from Table 1.
2) Acquiring a target tracing result according to the found target data by search.

Based on whether the value of C1 is encrypted or not, there are specifically two cases as follows:
In one possible case, determining a target tracing result according to the target data comprises: in the case where the data identification information in the corresponding relationship stored in the database is a ciphertext, the found target data by search is used as a target tracing result.

In the embodiments of the present disclosure, if the data identification information is stored after being encrypted in the corresponding relationship between the data identification information and the data in the database, that is, the data identification information is a ciphertext, at this time, because what is sent by the client is also a tracing clue ciphertext, for the server, even if the target tracing clues are of the same value, the performances in the database as well as the tracing clue ciphertext sent by the client and that received by the serve are completely different, accordingly, an attacker cannot know what the actual value of the target tracing clue is and cannot guess to which pieces of data the target tracing clue corresponds in the database, and therefore cannot carry out an effective data table content attack, and the credibility of the matched target data can already be ensured, and thus, the target data matched from the database can be directly returned to the server without being encrypted, for the reason that even if the server knows the target data, it cannot deduce what the target tracing clue is and attacks similar to an attack where a midpoint is hidden or an attack where the latest information is hidden cannot be carried out. In this way, in the case where the data identification information in the database is a ciphertext, the target data can be returned to the server without being encrypted, which not only can ensure the reliability, but also can improve the efficiency.

For example, if the column C1 in Table 1 is a ciphertext column, the TEE can directly return the matched target data as the target tracing result to the server after determining the matched target data.

Certainly, in the case where the data identification information in the database is a ciphertext, in order to further improve the safety, the TEE may also encrypt the target data, obtain a target tracing result and return the target tracing result to the server, to which no definition is made in the embodiments of the present disclosure.

In the other possible case, determining a target tracing result according to the target data comprises: in the case where the data identification information in the corresponding relationship stored in the database is a plaintext, the target data is encrypted according to the found target data by search and the encrypted target data is used as the target tracing result.

In the embodiments of the present disclosure, in the case where the data identification information in the database is not stored in an encrypted manner, that is, the data identification information in the database is stored in a plaintext manner, at this time, although it is a tracing clue ciphertext that is received by the server, if the TEE directly returns the matched target data to the server then, the server is likely to deduce what the target tracing clue sent by the client is, according to the target data and the data identification information corresponding to the target data in the database, and then may attack the target data and return the wrong target data to the client; therefore, in order to avoid such a situation, in the embodiments of the present disclosure, the TEE needs to encrypt the target data and then return the encrypted target data to the server, wherein no definition is made to the encryption manner, either, which may be a random encryption manner, and at this time, it is an encrypted target tracing result that is obtained by the server; since, as for the server, the target tracing clue is encrypted and the target tracing result is also encrypted, an attacker cannot deduce what the target tracing clue is, so that an effective data table content attack cannot be carried out, thereby improving the credibility.

For example, if the column C1 in Table 1 is a plaintext column, the TEE can encrypt the target data after determining the matched target data, using the encrypted target data as the target tracing result, and then return the target tracing result to the server.

S104, in response to the data tracing request, feeding back the target tracing result to the client.

Further, the TEE in the embodiments of the present disclosure may also sign the target tracing result to obtain a target signature of the target tracing result, so as to further improve the safety and traceability,

then when Step S104 is implemented at this time, a possible implementation is provided: signing the target tracing result to obtain a target signature of the target tracing result; and returning the target tracing result and the target signature to the client.

Further, after the Step S104 is implemented , the client may perform verification according to the target tracing result, for example, the digest value may be used for comparison to verify the correctness of the target tracing result.

Specifically, directed to the cases where the data identification information in the database is a ciphertext or a plaintext, after the client receives the target tracing result, there are further the following implementations:
1) In the case where the data identification information in the corresponding relationship stored in the database is a ciphertext, the target tracing result is namely the unencrypted target data, and at this time the client does not need to further perform decryption after receiving the target tracing result.
2) In the case where the data identification information in the corresponding relationship stored in the database is a plaintext, the target tracing result is namely the encrypted target data, and the client decrypts the target tracing result to obtain the target data.

In the embodiments of the present disclosure, the client may share a key with the TEE, and the client may perform decryption by using the shared key to obtain the target data.

In the embodiments of the present disclosure, a data tracing request sent by a client is received, wherein the tracing request carries a tracing clue ciphertext, the tracing clue ciphertext is decrypted in TEE to obtain the target tracing clue , target data matched with the target tracing clue is found by search from a database according to the target tracing clue , and a target tracing result is determined according to the target data and the target tracing result is further returned to the client. In this way, by adopting the manner in which encryption is combined with a TEE hardware, decryption of the tracing clue ciphertext is performed and a matching query of the target tracing clue is made in the TEE, so that the server cannot know what the actual value of the target tracing clue is, and thus it is impossible to attack or tamper with the table contents in the database, which improves the accuracy and credibility of the target tracing result, that is, by adopting a credible tracing manner in which encryption is combined with TEE, the credibility of the target tracing result is guaranteed; furthermore, for the data processing method in the embodiments of the present disclosure, since there is no restriction on the stored data structure and a special data storage structure is not required, for example, a simple format of data table may be used and the writing of each data record can be realized by table insertion, the data processing method in the embodiments of the present application not only can realize credible tracing in a highly efficient manner, but also improves writing performance.

It can be understood by those skilled in the art that in the above method of the specific embodiment, the order in which the steps are listed does not imply a strict order of execution and does not impose any limitation on the implementing process, rather the specific order of execution of the steps should be determined by functions and possible inherent logic thereof.

Based on the above example of Table 1, taking the data identification information being C1 as an example, a data processing method in the embodiments of the present disclosure is briefly described with a specific example.
1) A client sends a data tracing request to a server, wherein the tracing request carries a tracing clue ciphertext, for example, the target tracing clue is C1=123, that is, it is a ciphertext of 123 that is sent.
2) The server transmits the tracing clue ciphertext to a TEE.
   For example, TEE select count (*) from T where c1= ciphertext (clue) is called, which represents the number of pieces of the target data selected from Table T for c1= ciphertext (clue), wherein clue is the target tracing clue , ciphertext (clue) represents the tracing clue ciphertext, and count (*) represents the number of pieces of target data.
3) Decryption is performed on the tracing clue ciphertext in the TEE, target data matched with the target tracing clue is found by search from a database, and a target tracing result is determined according to the found target data by search.

For example, ciphertext (clue) is decrypted to acquire that the target tracing clue is 123, a matching query is made in Table T of the database according to c1=123, as shown in Table 1, it may be determined that there are three pieces of target data matched with c1=123, that is, target data count (*) = 3.

In the case where column C1 in the database is a ciphertext, the target tracing result is 3, and in the case where column C1 in the database is a plaintext, the target tracing result is encryption of 3.

4) The target tracing result is signed by the TEE and is returned to the server.

5) The server returns the target tracing result and the target signature to the client.

6) The client obtains the target tracing result, and can determine whether decryption is needed to obtain the target data, so that the client can obtain the target data the count (*) of which = 3.

In this way, in the embodiments of the present disclosure, decryption and tracing of the target tracing clue are performed in the TEE, so that the tracing reliability is ensured, and it is further possible for the TEE to determine whether to encrypt the target data and then return the encrypted target data to the server based on whether the data identification information in the database is stored in encrypted form, which reduces the risk of attack at the server end and improves the credibility and reliability of the target tracing result.

A description is made below with a specific application scenario, and referring to Fig. 2, an application architecture diagram of the data processing method provided in the embodiments of the present disclosure is shown.

As shown in Fig. 2, the application architecture of the data processing method in the embodiments of the present disclosure mainly includes a client, a server, a database, a TEE and an authentication service.
1) The client is used for receiving a target tracing clue input by a user and sending a data tracing request which carries a tracing clue ciphertext to the server, after encrypting the target tracing clue .
   Furthermore, the client is also used for receiving the target tracing result returned by the server and verifying the target tracing result.
2) The server is a database server, for example, a DBMS server, to which no definition is made in the embodiments of the present disclosure.
   The server can interact with the client and the TEE respectively, and is mainly used for sending the tracing clue ciphertext to the TEE, acquiring a target tracing result returned by the TEE and returning the target tracing result to the client.
3) The database is used for storing a corresponding relationship between the data identification information and the data.
   The corresponding relationship can be stored in form of a table, and a user can create a table in the database through statements relevant to the database, and can further insert a plurality of data records in the table of the database.
4) The TEE is mainly used for providing a trusted hardware execution environment, decrypting the tracing clue ciphertext to obtain a target tracing clue, searching for target data matched with the target tracing clue from the database according to the target tracing clue , determining a target tracing result according to the target data, and returning the target tracing result to the server.
   Herein, depending on the cases where the data identification information in the database is a ciphertext or a plaintext, the TEE can directly send the found target data by search which serves as a target tracing result to the server, or the TEE encrypts the target data to obtain a target tracing result and sends the target tracing result to the server.
5) The authentication service is mainly used for establishing a secure channel for the client and the TEE, so as to realize key sharing between the client and the TEE.

In this way, in the embodiments of the present disclosure, a key may be shared between the client and the TEE, and then the tracing clue ciphertext is decrypted in the TEE to obtain a matched target tracing result, the target tracing result may be encrypted target data or unencrypted target data according to the cases where the data identification information in the database is encrypted or not for storage, so that the server cannot know what the value of the target tracing clue sent by the client is, which reduces the risk of attack, further, the server returns the target tracing result to the client, and the client may determine whether to perform decryption to obtain the target data, thereby improving the efficiency and credibility of data tracing.

Based on the same inventive concept, a data processing apparatus corresponding to the data processing method is also provided in the embodiments of the present disclosure, and since the problem-solving principle of the apparatus in the embodiments of the present disclosure is similar to the above data processing method in the embodiments of the present disclosure, references can be made to the implementation of the method for the implementation of the apparatus, and the repeated parts are no longer described herein.

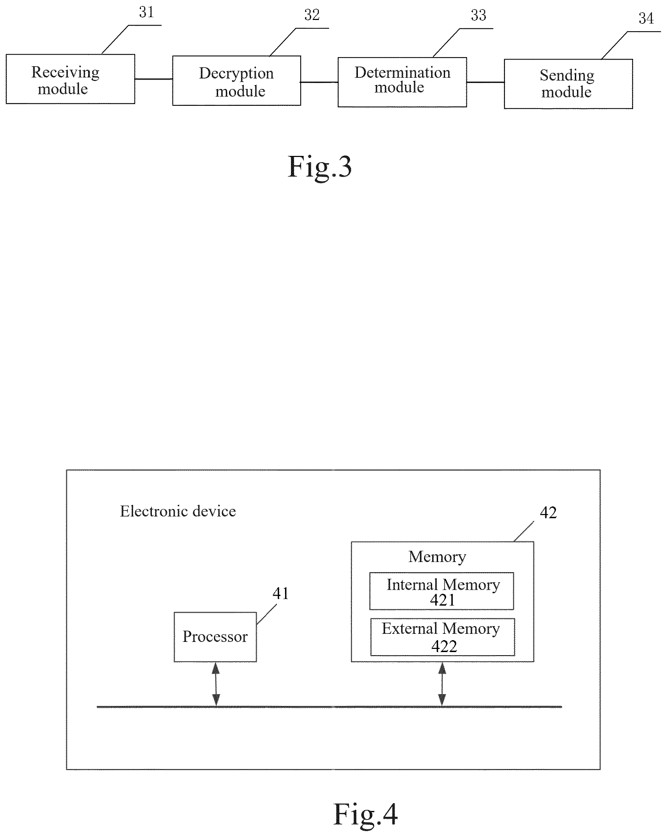

Reference is made to Fig. 3, which is a schematic diagram of a data processing apparatus provided by the embodiments of the present disclosure, the apparatus comprises:
a receiving module 31 configured to receive a data tracing request sent by a client, wherein the tracing request carries a tracing clue ciphertext which is generated by encrypting a target tracing clue based on a shared key agreed by the client and a trusted hardware execution environment, and wherein the target tracing clue is used for identifying target data;
a decryption module 32 configured to decrypt the tracing clue ciphertext in the trusted hardware execution environment to obtain the target tracing clue ;
a determination module 33 configured to search for target data matched with the target tracing clue from a database according to the target tracing clue and determine a target tracing result according to the target data; wherein the database is used for storing the corresponding relationship between the data identification information and the data and supporting query access of the data; and
a sending module 34 configured to, in response to the data tracing request, feed the target tracing result back to the client.

In an optional implementation, when determining a target tracing result according to the target data, the determination module 33 is configured to:
in the case where the data identification information in the corresponding relationship stored in the database is a ciphertext, use the found target data by search as a target tracing result.

In an optional implementation, when determining a target tracing result according to the target data, the determination module 33 is configured to:
in the case where the data identification information in the corresponding relationship stored in the database is a plaintext, encrypt the target data according to the found target data by search and use the encrypted target data as the target tracing result.

In an optional implementation, when, in response to the data tracing request, feeding back the target tracing result to the client, the sending module 34 is configured to:
sign the target tracing result to obtain a target signature of the target tracing result; and
return the target tracing result and the target signature to the client.

In an optional implementation, the corresponding relationship between the data identification information and the data is stored in a table format.

For the description of the processing flow of each module in the apparatus and the interaction flow between the modules, references may be made to the relevant description in the above method embodiments, and will not be described in detail herein.

The embodiments of the present disclosure further provide an electronic device, as shown in Fig. 4, which is a schematic structural diagram of an electronic device provided by the embodiments of the present disclosure, comprising:
a processor 41 and a memory 42, wherein the memory 42 stores machine-readable instructions executable by the processor 41, the processor 41 is used for executing the machine-readable instructions stored in the memory 42, and when the machine-readable instructions are executed by the processor 41, the processor 41 implements the following steps:
Receiving a data tracing request sent by a client, wherein the tracing request carries a tracing clue ciphertext which is generated by encrypting a target tracing clue based on a shared key agreed by the client and a trusted hardware execution environment, and wherein the target tracing clue is used for identifying target data;
Decrypting the tracing clue ciphertext in the trusted hardware execution environment to obtain the target tracing clue ;
Searching for target data matched with the target tracing clue from a database according to the target tracing clue , and determining a target tracing result according to the target data; wherein the database is used for storing the corresponding relationship between the data identification information and the data and supporting query access of the data; and
In response to the data tracing request, feeding back the target tracing result to the client.

In an optional implementation, when determining a target tracing result according to the target data, the processor 41 is configured to:
In the case where the data identification information in the corresponding relationship stored in the database is a ciphertext, use the found target data by search as a target tracing result.

In an optional implementation, when determining a target tracing result according to the target data, the processor 41 is configured to:
In the case where the data identification information in the corresponding relationship stored in the database is a plaintext, encrypt the target data according to the found target data by search and use the encrypted target data as the target tracing result.

In an optional implementation, when, in response to the data tracing request, feeding back the target tracing result to the client, the processor 41 is configured to:
sign the target tracing result to obtain a target signature of the target tracing result; and
return the target tracing result and the target signature to the client.

The above memory 42 includes an internal memory 421 and an external memory 422; the internal memory 421 here is also referred to as an internal memory, which is used for temporarily storing computing data in the processor 41 and data exchanged with the external memory 422 such as hard disk, and the processor 41 exchanges data with the external memory 422 via the internal memory 421.

For the specific executing process of the above instructions, reference can be made to the steps of the data processing method in the embodiments of the present disclosure, on which no further description is made herein.

The embodiments of the present disclosure further provide a computer-readable storage medium, wherein the computer-readable storage medium stores thereon a computer program which, when executed by a processor, enables the processor to implement the steps of the data processing method in the above method embodiments. Herein, the storage medium may be a volatile or non-volatile computer-readable storage medium.

The embodiments of the present disclosure further provide a computer program product, wherein the computer program product carries program code, and instructions included in the program code may be configured to execute the steps of the data processing method in the above method embodiments. Reference can be made to the above method embodiments, and no further description is made herein.

Herein, the above computer program product may be implemented by hardware, software or a combination thereof. In an optional embodiment, the computer program product is embodied as a computer storage medium, and in another optional embodiment, the computer program product is embodied as a software product, such as Software Development Kit (SDK) or the like.

It can be clearly understood by those skilled in the art that, in view of convenience and simplicity of description, for the specific working process of the system and the apparatus as described above, references may be made to the corresponding process in the foregoing method embodiments, and no more details are described herein. In the several embodiments provided in the present disclosure, it should be understood that the disclosed system, apparatus and method may be implemented in other ways. The above-described apparatus embodiments are merely illustrative; for example, the division of the units is merely one type of logical function division, and in practical implementation, other division manners may exist; a further example is that multiple units or components may be combined or integrated into another system, or some features may be omitted or not implemented. In addition, the shown or discussed coupling or direct coupling or communication connection between one another may be realized via some communication interfaces, and indirect coupling or communication connection between devices or units and may be in an electrical, mechanical or other form.

The units described as separate components may or may not be physically separate, and components displayed as units may or may not be physical units, that is, they may be located in one position, or may be distributed on multiple network units. Some or all of the units can be selected according to actual needs to achieve the purpose of the solution of the present embodiment.

In addition, functional units in the embodiments of the present disclosure may be integrated into one processing unit, or each unit may exist alone physically, or two or more units may be integrated into one unit.

The functions, if implemented in software functional units and sold or used as a stand-alone product, may be stored in a non-transitory computer-readable storage medium which is executable by a processor. Based on such understanding, the essential part or the part contributing to the prior art of the technical solutions of the present disclosure, or parts of the technical solutions, may be embodied in the form of a software product, and the computer software product is stored in a storage medium and comprises several instructions for enabling an electronic device (which may be a personal computer, a server, or a network device) to execute all or part of the steps of the method described in the embodiments of the present disclosure. And the aforementioned storage medium includes U disk, removable hard disk, Read-Only Memory (ROM), Random Access Memory (RAM), magnetic disk or optical disk, and other media that can store program code.

Finally, it should be noted that, the embodiments as described above are merely specific implementations of the present disclosure, which are only intended to be used for illustrating the technical solutions of the present disclosure, rather than for limiting the same, and the scope of protection of the present disclosure is not limited thereto; although the present disclosure has been described in detail with reference to the above-mentioned embodiments, those of ordinary skill in the art shall understand that the technical solutions described in the above-mentioned embodiments may still be modified or changed in a conceivable manner, or some or all of the technical features may be equivalently replaced within the technical scope as disclosed by the present disclosure by any one of ordinary skill in the art; however, such modifications or replacements will not cause the essence of the corresponding technical solutions to depart from the scope of the technical solutions of the embodiments of the present disclosure, and they should be construed as being included therein. Thus, the scope of protection of the present disclosure shall be determined by the terms of the claims.

## Claims

1. A data processing method, comprising:
receiving (S101) a data tracing request sent by a client, wherein the tracing request carries a tracing clue ciphertext which is generated by encrypting a target tracing clue based on a shared key agreed by the client and a trusted hardware execution environment, and wherein the target tracing clue is used for identifying target data;
decrypting (S102) the tracing clue ciphertext in the trusted hardware execution environment to obtain the target tracing clue;
searching (S103) for target data matched with the target tracing clue from a database according to the target tracing clue, and determining a target tracing result according to the target data; wherein the database is used for storing the corresponding relationship between the data identification information and the data and supporting query access of the data; and
in response to the data tracing request, feeding back (S104) the target tracing result to the client.

2. The method according to claim 1, wherein the determining a target tracing result according to the target data comprises:
in the case where the data identification information in the corresponding relationship stored in the database is a ciphertext, using the found target data by search as a target tracing result.

3. The method according to claim 1, wherein the determining a target tracing result according to the target data comprises:
in the case where the data identification information in the corresponding relationship stored in the database is a plaintext, encrypting the target data according to the found target data by search and using the encrypted target data as the target tracing result.

4. The method according to any one of claims 1 to 3, wherein in response to the data tracing request, feeding back the target tracing result to the client comprises:
signing the target tracing result to obtain a target signature of the target tracing result; and
returning the target tracing result and the target signature to the client.

5. The method according to claim 1**,** wherein the corresponding relationship between the data identification information and the data is stored in a table format.

6. A data processing apparatus, comprising:
a receiving module (31) configured to receive a data tracing request sent by a client, wherein the tracing request carries a tracing clue ciphertext which is generated by encrypting a target tracing clue based on a shared key agreed by the client and a trusted hardware execution environment, and wherein the target tracing clue is used for identifying target data;
a decryption module (32) configured to decrypt the tracing clue ciphertext in the trusted hardware execution environment to obtain the target tracing clue;
a determination module (33) configured to search for target data matched with the target tracing clue from a database according to the target tracing clue and determine a target tracing result according to the target data; wherein the database is used for storing the corresponding relationship between the data identification information and the data and supporting query access of the data; and
a sending module (34) configured to, in response to the data tracing request, feed the target tracing result back to the client.

7. The apparatus according to claim 6, wherein when determining a target tracing result according to the target data, the determination module is configured to:
in the case where the data identification information in the corresponding relationship stored in the database is a ciphertext, use the found target data by search as a target tracing result.

8. The apparatus according to claim 6, wherein when determining a target tracing result according to the target data, the determination module is configured to:
in the case where the data identification information in the corresponding relationship stored in the database is a plaintext, encrypt the target data according to the found target data by search and use the encrypted target data as the target tracing result.

9. An electronic device, comprising: a processor(41) and a memory (42), wherein the memory stores machine-readable instructions executable by the processor, the processor is used for executing the machine-readable instructions stored in the memory, and when the machine-readable instructions are executed by the processor, the processor implements the steps of the data processing method according to any one of claims 1 to 5.

10. A computer-readable storage medium, wherein the computer-readable storage medium stores thereon a computer program, and when the computer program is executed by a processor, the processor implements the steps of the data processing method according to any one of claims 1 to 5.

## Patentansprüche

1. Datenverarbeitungsverfahren, umfassend:
Empfangen (S101) einer vom Client gesendeten Datenverfolgungsanforderung, wobei die Verfolgungsanforderung einen Verfolgungshinweis-Chiffretext enthält, der durch Verschlüsseln eines Zielverfolgungshinweises auf der Grundlage eines zwischen dem Client und einer vertrauenswürdigen Hardware-Ausführungsumgebung vereinbarten gemeinsamen Schlüssels erzeugt wird, und wobei der Zielverfolgungshinweis zum Identifizieren von Zieldaten verwendet wird;
Entschlüsseln (S102) des Verfolgungshinweis-Chiffretextes in der vertrauenswürdigen Hardware-Ausführungsumgebung, um den Zielverfolgungshinweis zu erhalten;
Suchen (S103) nach Zieldaten, die mit dem Zielverfolgungshinweis übereinstimmen, in einer Datenbank entsprechend dem Zielverfolgungshinweis, und Bestimmen eines Zielverfolgungsergebnisses anhand der Zieldaten; wobei die Datenbank zum Speichern der entsprechenden Beziehung zwischen den Datenidentifikationsinformationen und den Daten und Unterstützen eines Abfragezugriffs auf die Daten verwendet wird; und
als Antwort auf die Datenverfolgungsanfrage, Rückmelden (S104) des Zielverfolgungsergebnisses an den Client.

2. Verfahren nach Anspruch 1, wobei das Bestimmen eines Zielverfolgungsergebnisses anhand der Zieldaten Folgendes umfasst:
falls die in der Datenbank gespeicherten Datenidentifikationsinformationen der entsprechenden Beziehung ein Chiffretext sind, Verwenden der durch die Suche gefundenen Zieldaten als ein Zielverfolgungsergebnis.

3. Verfahren nach Anspruch 1, wobei das Bestimmen eines Zielverfolgungsergebnisses anhand der Zieldaten Folgendes umfasst:
falls die in der Datenbank gespeicherten Datenidentifikationsinformationen der entsprechenden Beziehung ein Klartext sind, Verschlüsseln der Zieldaten entsprechend den durch die Suche gefundenen Zieldaten und Verwenden der verschlüsselten Zieldaten als das Zielverfolgungsergebnis.

4. Verfahren nach einem der Ansprüche 1 bis 3, wobei als Antwort auf die Datenverfolgungsanforderung Rückmelden des Zielverfolgungsergebnisses an den Client Folgendes umfasst:
Signieren des Zielverfolgungsergebnisses, um eine Zielsignatur des Zielverfolgungsergebnisses zu erhalten; und
Zurücksenden des Zielverfolgungsergebnisses und der Zielsignatur an den Client.

5. Verfahren nach Anspruch 1, wobei die entsprechende Beziehung zwischen den Datenidentifikationsinformationen und den Daten in Tabellenform gespeichert ist.

6. Datenverarbeitungseinrichtung, umfassend:
ein Empfangsmodul (31), das so konfiguriert ist, dass es eine vom Client gesendete Datenverfolgungsanforderung empfängt, wobei die Verfolgungsanforderung einen Verfolgungshinweis-Chiffretext enthält, der durch Verschlüsseln eines Zielverfolgungshinweises auf der Grundlage eines zwischen dem Client und einer vertrauenswürdigen Hardware-Ausführungsumgebung vereinbarten gemeinsamen Schlüssels erzeugt wird, und wobei der Zielverfolgungshinweis zum Identifizieren von Zieldaten verwendet wird;
ein Entschlüsselungsmodul (32), das so konfiguriert ist, dass es den Verfolgungshinweis-Chiffretext in der vertrauenswürdigen Hardware-Ausführungsumgebung entschlüsselt, um den Zielverfolgungshinweis zu erhalten;
ein Bestimmungsmodul (33), das so konfiguriert ist, dass es nach Zieldaten, die mit dem Zielverfolgungshinweis übereinstimmen, in einer Datenbank entsprechend dem Zielverfolgungshinweis sucht und anhand der Zieldaten ein Zielverfolgungsergebnis bestimmt; wobei die Datenbank zum Speichern der entsprechenden Beziehung zwischen den Datenidentifikationsinformationen und den Daten und Unterstützen des Abfragezugriffs auf die Daten verwendet wird; und
ein Sendemodul (34), das so konfiguriert ist, dass es als Antwort auf die Datenverfolgungsanforderung das Zielverfolgungsergebnis an den Client zurückmeldet.

7. Einrichtung nach Anspruch 6, wobei das Bestimmungsmodul beim Bestimmen eines Zielverfolgungsergebnisses anhand der Zieldaten dazu konfiguriert ist:
falls die in der Datenbank gespeicherten Datenidentifikationsinformationen der entsprechenden Beziehung ein Chiffretext sind, die durch die Suche gefundenen Zieldaten als Zielverfolgungsergebnis zu verwenden.

8. Einrichtung nach Anspruch 6, wobei das Bestimmungsmodul beim Bestimmen eines Zielverfolgungsergebnisses anhand der Zieldaten dazu konfiguriert ist:
falls die in der Datenbank gespeicherten Datenidentifikationsinformationen der entsprechenden Beziehung ein Klartext sind, die Zieldaten entsprechend den durch die Suche gefundenen Zieldaten zu verschlüsseln und die verschlüsselten Zieldaten als Zielverfolgungsergebnis zu verwenden.

9. Elektronische Vorrichtung, umfassend: einen Prozessor (41) und einen Speicher (42), wobei der Speicher maschinenlesbare Anweisungen speichert, die vom Prozessor ausgeführt werden können, der Prozessor zum Ausführen der im Speicher gespeicherten maschinenlesbaren Anweisungen verwendet wird, der Prozessor beim Ausführen der maschinenlesbaren Anweisungen die Schritte des Datenverarbeitungsverfahrens nach einem der Ansprüche 1 bis 5 implementiert.

10. Computerlesbares Speichermedium, auf dem ein Computerprogramm gespeichert ist, und wenn das Computerprogramm von einem Prozessor ausgeführt wird, der Prozessor die Schritte des Datenverarbeitungsverfahrens nach einem der Ansprüche 1 bis 5 implementiert.

## Revendications

1. Procédé de traitement de données, comprenant :
la réception (S101) d'une requête de traçage de données envoyée par un client, dans lequel la requête de traçage contient un texte chiffré d'indice de traçage qui est généré en chiffrant un indice de traçage cible sur la base d'une clé partagée convenue par le client et un environnement d'exécution matériel de confiance, et dans lequel l'indice de traçage cible est utilisé pour identifier les données cibles ;
le déchiffrage (S102) du texte chiffré d'indice de traçage dans l'environnement d'exécution matériel de confiance pour obtenir l'indice de traçage cible ;
la recherche (S103) de données cibles correspondant à l'indice de traçage de la cible dans une base de données, selon cet indice, et la détermination d'un résultat de traçage de la cible en fonction des données cibles ; dans lequel la base de données est utilisée pour stocker la relation correspondante entre les informations d'identification des données et les données elles-mêmes, et pour permettre l'accès aux données par requête ;
en réponse à la demande de traçage des données, le renvoi (S104) du résultat de traçage cible au client.

2. Procédé selon la revendication 1, dans lequel la détermination d'un résultat de traçage cible en fonction des données cibles comprend :
dans le cas où les informations d'identification des données dans la relation correspondante stockées dans la base de données sont un texte chiffré, l'utilisation des données cibles trouvées par la recherche comme résultat de traçage de la cible.

3. Procédé selon la revendication 1, dans lequel la détermination d'un résultat de traçage cible en fonction des données cibles comprend :
dans le cas où les informations d'identification des données dans la relation correspondante stockées dans la base de données sont en clair, le chiffrage des données cibles en fonction des données cibles trouvées par la recherche et l'utilisation des données cibles chiffrées comme résultat de traçage de la cible.

4. Procédé selon l'une quelconque des revendications 1 à 3, dans lequel, en réponse à la demande de traçage des données, le renvoi au client du résultat du traçage cible comprend :
la signature du résultat du traçage de la cible pour obtenir une signature cible du résultat du traçage de la cible ; et
le renvoi au client du résultat du traçage de la cible et de la signature de la cible.

5. Procédé selon la revendication 1, dans lequel la relation correspondante entre les informations d'identification des données et les données est stockée sous forme de tableau.

6. Appareil de traitement de données, comprenant :
un module de réception (31) configuré pour recevoir une requête de traçage de données envoyée par un client, dans lequel la requête de traçage transporte un texte chiffré d'indice de traçage qui est généré en chiffrant un indice de traçage cible basé sur une clé partagée convenue par le client et un environnement d'exécution matériel de confiance, et dans lequel l'indice de traçage cible est utilisé pour identifier les données cibles ;
un module de déchiffrage (32) configuré pour déchiffrer le texte chiffré de l'indice de traçage dans l'environnement d'exécution matériel de confiance afin d'obtenir l'indice de traçage cible ;
un module de détermination (33) configuré pour rechercher dans une base de données des données cibles correspondant à l'indice de traçage de la cible, en fonction de cet indice, et pour déterminer un résultat de traçage de la cible en fonction de ces données ; dans lequel la base de données est utilisée pour stocker la relation correspondante entre les informations d'identification des données et les données elles-mêmes, et pour permettre l'accès aux données par requête ;
un module d'envoi (34) configuré pour, en réponse à la demande de traçage des données, renvoyer le résultat du traçage cible au client.

7. Appareil selon la revendication 6, dans lequel, lors de la détermination d'un résultat de traçage de cible en fonction des données de cible, le module de détermination est configuré pour :
dans le cas où les informations d'identification des données dans la relation correspondante stockées dans la base de données sont un texte chiffré, utiliser les données cibles trouvées par la recherche comme résultat de traçage de la cible.

8. Appareil selon la revendication 6, dans lequel, lors de la détermination d'un résultat de traçage de cible en fonction des données de cible, le module de détermination est configuré pour :
dans le cas où les informations d'identification des données dans la relation correspondante stockées dans la base de données sont en clair, chiffrer les données cibles en fonction des données cibles trouvées par la recherche et utiliser les données cibles chiffrées comme résultat de traçage de la cible.

9. Dispositif électronique comprenant : un processeur (41) et une mémoire (42), dans lequel la mémoire stocke des instructions lisibles par machine exécutables par le processeur, le processeur est utilisé pour exécuter les instructions lisibles par machine stockées dans la mémoire, et lorsque les instructions lisibles par machine sont exécutées par le processeur, le processeur met en œuvre les étapes du procédé de traitement des données selon l'une quelconque des revendications 1 à 5.

10. Support de stockage lisible par ordinateur, dans lequel le support de stockage lisible par ordinateur stocke un programme informatique, et lorsque le programme informatique est exécuté par un processeur, ledit processeur met en œuvre les étapes du procédé de traitement de données selon l'une quelconque des revendications 1 à 5.
